Europäisches Patentamt

(19) **European Patent Office**

**Office européen des brevets**

(11) Veröffentlichungsnummer: **0 199 917**
**B1**

(12) **EUROPÄISCHE PATENTSCHRIFT**

(45) Veröffentlichungstag der Patentschrift:
**19.04.89**

(51) Int. Cl.⁴: **B60K 17/35**

(21) Anmeldenummer: **86102106.1**

(22) Anmeldetag: **18.02.86**

(54) Allradantrieb für ein Kraftfahrzeug.

(30) Priorität: **25.04.85 DE 3514947**

(43) Veröffentlichungstag der Anmeldung:
**10.12.86 Patentblatt 86/45**

(45) Bekanntmachung des Hinweises auf die Patenterteilung:
**19.04.89 Patentblatt 89/16**

(84) Benannte Vertragsstaaten:
**DE FR GB IT SE**

(56) Entgegenhaltungen:
**EP-A- 0 068 309**
**EP-A- 0 149 302**
**DE-A- 3 507 492**
**GB-A- 2 139 972**
**US-A- 4 031 780**

(73) Patentinhaber: **Dr.Ing.h.c. F. Porsche Aktiengesellschaft, Porschestrasse 42, D-7000 Stuttgart 40(DE)**
Patentinhaber: **GETRAG Getriebe- und Zahnradfabrik GmbH, Postfach 449 Solitudeallee 24, D-7140 Ludwigsburg(DE)**

(72) Erfinder: **Hickmann, Udo, Dipl.-Ing., Goetzentor 8/4, D-7130 Mühlacker(DE)**
Erfinder: **Ruehle, Guenter, Dip.-Ing. FH, Karl-Gaerttner-Strasse 21, D-7120 Bietigheim-Bissingen(DE)**

## Beschreibung

Die Erfindung betrifft einen permanenten Allradantrieb für ein durch eine Brennkraftmaschine angetriebenes Kraftfahrzeug nach dem Oberbegriff des Anspruchs 1.

Bei einem derartigen, in DE-A 3 507 492 beschriebenen, permanenten Allrad, ist als Sperrvorrichtung eine Visko-Lamellenkupplung verwendet. Das von ihr übertragbare Drehmoment wird um so größer, je größer die Drehzahldifferenz zwischen Vorderachse und Hinterachse wird. Dieses erwünschte Verhalten führt beim Abschleppen des Kraftfahrzeuges zu Schwierigkeiten, wenn die eine Achse auf das Schleppfahrzeug gehoben wird und stillsteht, die andere Achse auf der Fahrbahn rollt. Hier wird die Differenzdrehzahl und somit das an der Viskokupplung aufgebaute Drehmoment so hoch, daß die Viskokupplung nach kurzer Zeit durch Überhitzen zerstört wird.

Aus EP-A 149 302 ist es bekannt, eine Allradsperrvorrichtung durch eine schaltbare Kupplung mit dem Antriebsstrang Vorderachse-Hinterachse zu verbinden. Die Aufgabe der Erfindung besteht darin, einen permanenten Allradantrieb so zu gestalten, daß die Sperrvorrichtung beim Abschleppen des Kraftfahrzeuges nicht beschädigt werden kann.

Zur Lösung dieser Aufgabe dienen die kennzeichnenden Merkmale des Anspruchs 1. Wenn die Sperrvorrichtung durch eine schaltbare Kupplung vom Antriebsstrang Vorderachse-Hinterachse abtrennbar ist, wird durch Betätigen dieser Kupplung jeweils vor dem Abschleppen des Kraftfahrzeuges eine Beschädigung der Sperrvorrichtung vermieden. Um das Abschalten der Sperrvorrichtung unabhängig von der Aufmerksamkeit des Fahrers zu gewährleisten, ist vorgesehen, sie in Abhängigkeit von Kenngrößen des Kraftfahrzeuges oder der Brennkraftmaschine automatisch auszuschalten, sobald die Brennkraftmaschine stillsteht. Zur Steuerung sind zweckmäßigerweise solche Kenngrößen verwendet, die bei Inbetriebnahme der Brennkraftmaschine sprunghaft von Null auf ihren Betriebswert ansteigen, beispielsweise der Schmieröldruck oder der Saugrohrunterdruck. Alternativ hierzu kann auch eine automatische Kupplungsschaltung durch einen Drehzahlsensor der Brennkraftmaschine, der eine elektrische Spannung auf einen Hubmagnet gibt, erfolgen. Weitere Unteransprüche beinhalten konstruktive Details der Sperrvorrichtung, sowie der schaltbaren Kupplung, für die bevorzugt eine handelsübliche Zahnkupplung mit formschlüssig ineinandergreifenden Kupplungsgliedern gewählt wird.

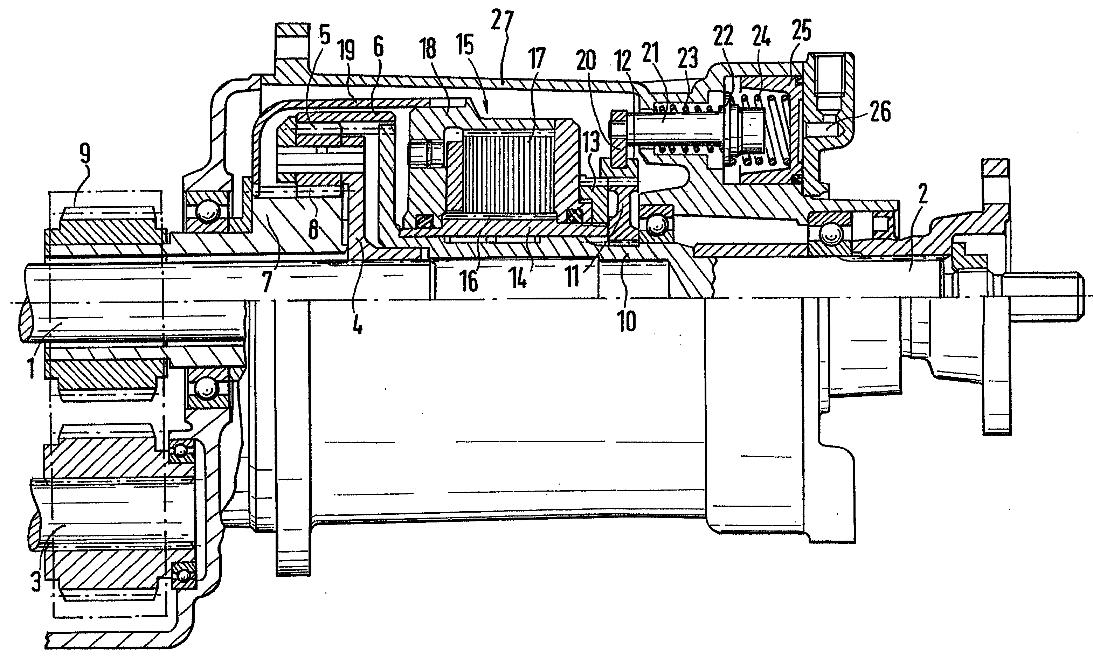

Ein Ausführungsbeispiel der Erfindung ist in der Zeichnung dargestellt und wird nachfolgend erläutert.

Eine zwischen der Vorderachse und der Hinterachse eines Kraftfahrzeuges angeordnete Allrad-Sperrvorrichtung besitzt eine vom Geschwindigkeitswechselgetriebe ausgehende, zentrale Eingangswelle 1, eine Antriebswelle 2 zur Hinterachse und eine weitere Antriebswelle 3 zur Vorderachse des Kraftfahrzeuges. Auf ein Keilprofil der Eingangswelle 1 ist die Nabe eines Planetenträgers 4 aufgesteckt, der über die auf ihm gelagerte Planetenräder 5 einerseits ein mit der Antriebswelle 2 zur Hinterachse verbundenes Hohlrad 6, andererseits ein auf einer Hohlwelle 7 angebrachtes Sonnenrad 8 antreibt, das zur Betätigung eines Kettentriebes 9 und der Antriebswelle 3 dient.

Auf einem hohlen Wellenfortsatz 10 des Hohlrades 6, der in die Antriebswelle 2 übergeht, ist ein Zahnrad 11 befestigt, in dessen Verzahnung ein Muffenzahnrad 12 eingreift, das durch Längsverschieben zusätzlich in ein Zahnrad 13 einrückbar ist, das auf einer Kupplungsnabe 14 einer Visko-Lamellenkupplung 15 befestigt ist. Mit der Kupplungsnabe 14 sind Innenlamellen 16 drehfest verbunden, wogegen Außenlamellen 17 an einem Gehäuse 18 drehfest angebracht sind, das über eine Glocke 19 in ein Keilprofil der Hohlwelle 7 eingreift und so mit der Antriebswelle 3 drehmomentübertragend verbunden ist.

Steht das Muffenzahnrad 12 mit beiden Zahnrädern 11 und 13 in Eingriff, so ist die Visko-Lamellenkupplung 15 als Sperrvorrichtung in den Antriebsstrang Vorderachse-Hinterachse eingeschaltet. Bei einer Drehzahldifferenz zwischen Vorderachse und Hinterachse wird durch die Scherkräfte des zwischen den Innenlamellen 16 und Außenlamellen 17 befindlichen, zähflüssigen Öles ein Sperrmoment aufgebaut, das degressiv mit der Differenzdrehzahl ansteigt. Dieses Sperrmoment kann z.B. beim Abschleppen des Kraftfahrzeuges so hoch werden, daß die Visko-Lamellenkupplung 15 durch die dadurch hervorgerufene starke Überhitzung zerstört wird. Um das zu vermeiden, ist vorgesehen, die Visko-Lamellenkupplung 15 durch eine schaltbare Zahnkupplung vom Antriebsstrang abtrennbar zu gestalten. Hierzu greift eine Schaltgabel 20 in eine umlaufende Nut des Muffenzahnrads 12 ein, die stirnseitig an einem Stellkolben 21 befestigt ist. An einem Bund 22 des Stellkolbens 21 liegt von der einen Seite eine Druckfeder 23 an, die sich im Gehäuse 27 abstützt. An der anderen Seite ist der Bund 22 durch eine Druckfeder 24 belastet, die am Boden eines hohlen Hydraulikkolbens 25 anliegt. Der Hydraulikkolben 25 ist im Gehäuse 27 abgedichtet geführt und über Hydraulikbohrungen 26 an den Schmierölkreislauf der Brennkraftmaschine angeschlossen. Da der Schmieröldruck in der Brennkraftmaschine bei deren Stillsetzung abgebaut wird, hört auch die Druckbeaufschlagung des Hydraulikkolbens 25 auf. Der Stellkolben 21 wird durch die Kraft der Druckfeder 23 in seine Ausgangslage zurückgestellt und rastet dabei über die Schaltgabel 20 das Muffenzahnrad 12 aus dem mit der Kupplungsnabe 14 verbundenen Zahnrad 13 aus, so daß bei Stillsetzen der Brennkraftmaschine die Visko-Lamellenkupplung 15 selbsttätig vom Antriebsstrang Vorderachse-Hinterachse abgetrennt wird.

Alternativ zur Beaufschlagung durch den Schmieröldruck kann die schaltbare Zahnkupplung auch durch den Öldruck der Servolenkung des Kraftfahrzeugs oder durch den Saugrohrunterdruck der Brennkraftmaschine betätigt werden.

## Patentansprüche

1. Permanenter Allradantrieb für ein durch eine Brennkraftmaschine angetriebenes Kraftfahrzeug, mit einer im Antriebsstrang Vorderachse-Hinterachse angeordneten Sperrvorrichtung, die ein mit der Drehzahldifferenz zwischen Vorderachse und Hinterachse ansteigendes Drehmoment überträgt, wobei die Sperrvorrichtung durch eine schaltbare Kupplung mit dem Antriebsstrang drehmomentübertragend verbindbar ist, dadurch gekennzeichnet, daß die Sperrvorrichtung (15) mit der schaltbaren Kupplung (11, 12, 13) bei Stillstand der Brennkraftmaschine durch Kenngrößen der Brennkraftmaschine oder des Kraftfahrzeugs vom Antriebsstrang (Antriebswelle 2) abtrennbar ist.

2. Allradantrieb nach Anspruch 1, dadurch gekennzeichnet, daß die schaltbare Kupplung (11, 12, 13) durch den Schmieröldruck der Brennkraftmaschine betätigbar ist.

3. Allradantrieb nach Anspruch 1, dadurch gekennzeichnet, daß die schaltbare Kupplung (11, 12, 13) durch den Öldruck der Servolenkung des Kraftfahrzeugs betätigbar ist.

4. Allradantrieb nach Anspruch 1, dadurch gekennzeichnet, daß die schaltbare Kupplung (11, 12, 13) durch den Saugrohrunterdruck der Brennkraftmaschine betätigbar ist.

5. Allradantrieb nach Anspruch 1, wobei als Sperrvorrichtung eine Visko-Lamellenkupplung (15) aus in einer Scherflüssigkeit liegenden Innenlamellen (16) und Außenlamellen (17) verwendet ist, dadurch gekennzeichnet, daß die Innenlamellen (16) auf einer Kupplungsnabe (14) angeordnet sind, die durch die schaltbare Kupplung (11, 12, 13) mit der Antriebswelle (2) zu einer Achse (Hinterachse) verbindbar ist, wogegen die Außenlamellen (17) an einem Gehäuse (18) der Visko-Lamellenkupplung (15) angebracht sind, das mit der Antriebswelle (3) zur anderen Achse (Vorderachse) drehmomentübertragend verbunden ist.

6. Allradantrieb nach Anspruch 1 oder 5, dadurch gekennzeichnet, daß die schaltbare Kupplung (11, 12, 13) als Zahnkupplung ausgebildet ist.

7. Allradantrieb nach Anspruch 5 und 6, dadurch gekennzeichnet, daß die Zahnkupplung (11, 12, 13) aus einem an der Kupplungsnabe (14) drehfesten Zahnrad (13), einem zur Antriebswelle (2) drehfesten Zahnrad (11) und einem im Einkuppelzustand mit beiden Zahnrädern (11, 13) in Eingriff stehenden Muffenzahnrad (12) besteht, in das eine Schaltgabel (20) eingreift, die von einem Hydraulikkolben (25) entgegen Federkraft bewegbar ist.

## Claims

1. Permanent all-wheel drive for a motor vehicle driven by an internal-combustion engine, with a locking device located in the front axle/back axle driving line, which device transmits a torque increasing with the speed difference between the front axle and back axle, the locking device being able to be connected to the driving line in a torque-transmitting manner by a clutch coupling, characterised in that when the internal-combustion engine is stopped, the locking device (15) with the clutch coupling (11, 12, 13) can be disconnected from the driving line (drive shaft 2) due to characteristic values of the internal-combustion engine or of the motor vehicle.

2. All-wheel drive according to Claim 1, characterised in that the clutch coupling (11, 12, 13) can be actuated by the lubricating oil pressure of the internal-combustion engine.

3. All-wheel drive according to Claim 1, characterised in that the clutch coupling (11, 12, 13) can be actuated by the oil pressure of the power-assisted steering of the motor vehicle.

4. All-wehel drive according to Claim 1, characterised in that the clutch coupling (11, 12, 13) can be actuated by the exhaust pipe reduced pressure of the internal-combustion engine.

5. All-wheel drive according to Claim 1, a visco-hydraulic disc clutch (15) comprising internal discs (16) and external discs (17) located in a shear liquid being used as the locking device, characterised in that the inner discs (16) are located on a clutch hub (14), which can be connected by the clutch coupling (11, 12, 13) to the drive shaft (2) to an axle (back axle), whereas the outer discs (17) are located on a housing (18) of the visco-hydraulic disc clutch (15), which is connected in a torque-transmitting manner to the drive shaft (3) to the other axle (front axle).

6. All-wheel drive according to Claim 1 or 5, characterised in that the clutch coupling (11, 12, 13) is constructed as a gear coupling.

7. All-wheel drive according to Claims 5 and 6, characterised in that the gear coupling (11, 12, 13) consists of a gear (13) located in a non-rotary manner on the clutch hub (14), a gear (11) arranged in a non-rotary manner with respect to the drive shaft (2) and a sleeve gear (12) meshing with both gears (11, 13) in the coupled state, in which gear (12) a shift fork (20) engages, which can be moved by a hydraulic piston (25) against spring force.

## Revendications

1. Transmission permanente pour traction sur les quatre roues pour un véhicule à moteur entraîné par un moteur à combustion interne, comportant un dispositif de blocage placé sur le train de transmission essieu avant-essieu arrière, qui transmet un couple croissant avec la différence de vitesse de rotation entre l'essieu avant et l'essieu arrière, le dispositif de blocage pouvant être relié par un embrayage manœuvrable au train de transmission en transmettant des couples, caractérisée en ce que le dispositif de blocage (15) peut, avec l'embrayage manœuvrable (11, 12, 13) être séparé du train de transmission (arbre d'entraînement 2) lorsque le moteur à combustion interne est à l'arrêt par des caractéristiques du moteur à combustion interne ou du véhicule à moteur.

2. Transmission selon la revendictation 1, caractérisée en ce que l'embrayage (11, 12, 13) peut être actionné par la pression d'huile lubrifiante du moteur à combustion interne.

3. Transmission selon la revendication 1, caractérisée en ce que l'embrayage (11, 12, 13) peut être actionné par la pression d'huile de la direction assistée du véhicule.

4. Transmission selon la revendication 1, caractérisée en ce que l'embrayage (11, 12, 13) peut être actionné par la dépression du collecteur d'admission du moteur à combustion interne.

5. Transmission selon la revendication 1, où l'on utilise, comme dispositif de blocage, un embrayage visqueux à disques (15), comprenant des disques intérieurs (16) et des disques extérieurs (17) se trouvant dans un liquide de cisaillement, caractérisée en ce que les disques intérieurs (16) sont placés sur un moyeu d'embrayage (14), qui peut être relié par l'embrayage manœuvrable (11, 12, 13) à l'arbre d'entraînement (2) aboutissant à un essieu (essieu arrière), tandis que les disques extérieurs (17) sont placés sur un carter (18) de l'embrayage à disque à liquide visqueux (15), qui est relié en transmettant les couples à l'arbre d'entraînement (3) aboutissant à l'autre essieu (essieu avant).

6. Transmission selon la revendication 1 ou 5, caractérisée en ce que l'embrayage manœuvrable (11, 12, 13) est réalisé sous la forme d'un embrayage à denture.

7. Transmission selon les revendications 5 et 6, caractérisée en ce que l'embrayage à denture (11, 12, 13) comprend un pignon (13), calé en rotation sur le moyeu d'embrayage (14), un pignon (11) fixe en rotation par rapport à l'arbre d'entraînement (2) et un manchon denté (12) engrenant avec les deux pignons (11, 13) dans l'état embrayé, dans lequel s'engage une fourchette d'embrayage (20) qui peut être déplacée par un piston hydraulique (25) contre une force élastique.